# EUROPEAN PATENT SPECIFICATION

(11) **EP 1 294 260 B1**
(45) Date of publication and mention of the grant of the patent: **08.08.2007**
(21) Application number: 01925751.8
(22) Date of filing: 04.05.2001
(51) Int. Cl.: A47J 27/21, A47J 31/44, G01F 23/02

(54) **ILLUMINATED JUG KETTLE**
BELEUCHTETER KESSEL
BOUILLOIRE ECLAIREE

(30) Priority: 27.06.2000 GB 0015749
(43) Date of publication of application: 26.03.2003
(73) Proprietor: Pulse Home Products Limited, Oldham OL2 5LN (GB)
(72) Inventor: Croll, Raymond John Edwin Pulse Home Products Ltd, Royton, Oldham OL2 5LN (GB)
(74) Representative: Robinson, Nigel Alexander Julian
(86) International application number: PCT/GB2001/002022
(87) International publication number: WO 2002/000072

(56) References cited:
- EP-A- 0 451 689
- WO-A-98/27851
- DE-U- 29 921 433
- GB-A- 2 195 446
- US-A- 4 387 594

## Description

The present invention relates to liquid level indication. More particularly this invention relates to liquid level indication in kettles.

It is known for kettles to include means which permit a user to see the level of water in the kettle so that they know whether there is enough water in the kettle for the purpose they intend, and as a means to prevent the user overfilling the kettle whilst they are replenishing it from a cold water source.

Several types of visual indicator exist which may either be formed as a separate unit or built into the structure of the kettle. In one example, a tube like conduit is formed or placed in contact with the water reservoir of the appliance and water passes along this conduit to the same level as that in the main reservoir. The level of the water in the conduit then indicates the level of the water in the main reservoir. This type of device may rely on the meniscus formed by the water surface as a visual indicator of water level, or it may contain a further buoyant object designed to float on the surface of the water in the conduit. Often this buoyant object is made from a brightly coloured plastic material so as to enhance the visibility of the liquid level line.

However, conduit type devices suffer from several drawbacks. They are prone to scaling up when used in regions where the water is hard and scale forms and this reduces the visibility of the meniscus in the conduit, or worse, impedes the free motion of any buoyant float placed in the conduit. They are also difficult to view as the conduit is often relatively narrow compared to the size of the kettle itself, necessitating the user moving around the kettle, or turning the kettle relative to their viewpoint, in order to get a good view of the level indicator. Furthermore, such conduit devices are relatively expensive to produce since they require either the fitting of a separate unit to an appliance, or the moulding of a separate conduit. This increases the manufacturing cost and complexity of such conduit-based appliances.

GB-A-2,332,522 discusses a device of the conduit type, in which visibility of the liquid in a conduit is enhanced by a reflective float and further by illuminating the liquid in the conduit from below by means of a light emitting diode. WO-A-98/27851 also discloses a conduit type device in which a neon indicator is used to further enhance the visibility of liquid found in the conduit by illuminating it from below.

Other types of appliance are known which try to overcome the problems of conduit based devices. In one, relatively large windows are formed in the body of the appliance through Which a meniscus formed by any water in the appliance is visible. There are several problems that present with this type of device. Firstly, as with the conduit type of device, the window itself is prone to becoming obscured over time due to the formation of scale deposits. The window is also prone to becoming obscured by the formation of condensation. Both these disadvantages lead to a decreased visibility of the meniscus formed by the liquid in the appliance.

DE-U-29921433 discloses an electrical brewing machine, having a receptacle for containing filtrate and a housing, in which the vessel is illuminated by a light source in the wall of the housing.

It is an objective of the present invention to address the problems associated with prior art kettle devices.

According to the present invention there is provided a kettle in which a window is formed in at least part of an outer wall of the kettle, and at least one light source is fixed to an inner surface of said kettle at a position spaced apart from said window and above a maximum liquid level of said kettle for illuminating a top surface of any liquid contained in said kettle such that a liquid level within said kettle can be read through said window. In one preferred embodiment of the invention at least one light source is additionally arranged so as to direct light substantially towards the window.

The invention overcomes the technical prejudice against fixing lights within the kettle due to the problems of water sealing. However, the invention recognises that providing the light source above the water level avoids the possibility of water leakage around the light whilst providing increased visibility of the water level within the kettle.

According to preferred embodiments of the invention a kettle is provided with a lid in which at least one light source is fixed to that lid. In addition, or alternatively, embodiments of the invention may comprise a switch disposed at an upper position opposite the window and at least one light source may be fixed to a point proximal to that switch. These features provide preferred fixing points for the light close to existing power supply wiring and are relatively easily accessible for maintenance.

Although not limited to any particular type of kettle, preferred embodiments of the invention are jug kettles, and also cordless jug kettles. The shape of these kettles make them well suited to use of this invention.

In one preferred embodiment of the invention a relatively large window is used so as to allow the water level in the kettle to be viewed from many directions. The use of a large window also enables users to see a relatively long line corresponding to the meniscus of any water in the kettle through the window. The level of the meniscus formed on the window indicating how much, if any, liquid is contained within the kettle. The window may itself be marked with graduations, indicating in volume terms (litres, millilitres, pints etc.) and/or other measurement units (such as the number of cups-worth or mugs-worth for example) of how much liquid remains in the kettle. The window may also indicate a maximum and/or minimum level of liquid with which the kettle is safely operable.

Further preferred embodiments of the invention optionally use one or more other constructional features chosen to enhance the visibility of the meniscus through the kettle's window, either individually or in combination with one another. One such constructional feature relates to the use of coloured windows (although any translucent colour could be used). Another preferred embodiment uses a window element which is frosted so as to reduce the visual degradation of scale deposits and/or condensation on the visibility of the meniscus and appearance of the kettle. Preferred embodiments of the invention may also use one or more light sources of various colours, or even a plurality of different colours. Such coloured light sources may be chosen to compliment the colour of the window so as to improve the visibility of the meniscus indicating the liquid content of the kettle, and/or they may be standard, long life, low cost, light sources that are readily available to the kettle manufacturer.

Embodiments of the invention will now be described, by way of example only, with reference to the accompanying drawings in which:

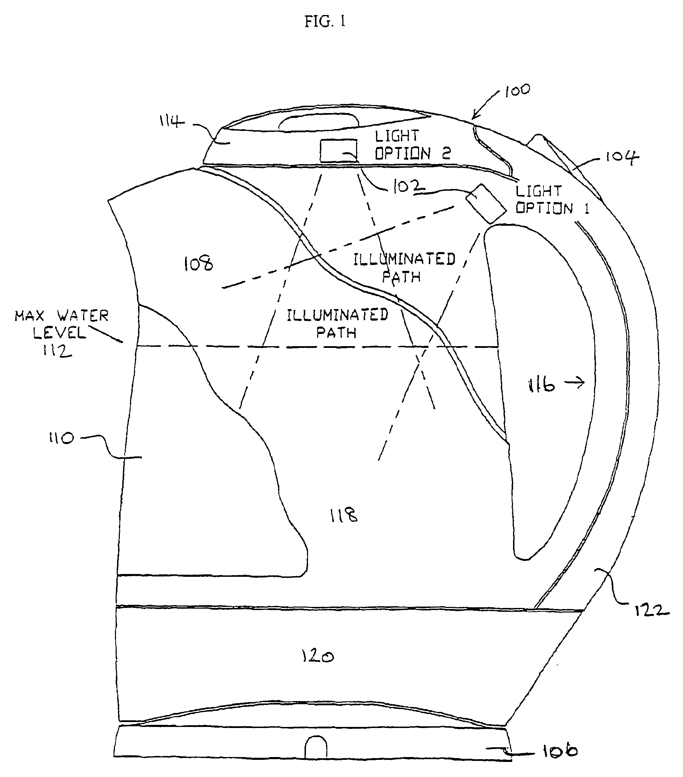

Figure 1 illustrates a jug kettle according to various example embodiments of the present invention.

Figure 1 illustrates a jug kettle 100 (although the invention may be used with any sort of kettle). The jug kettle 100 is formed of a kettle body 108 which holds liquid water 118 which is to be heated. The kettle body 108 is typically made of a thermosetting plastic material that is resistant to heat to a temperature higher than the maximum working temperature to which it is required to heat water 118 in the jug kettle 100. The kettle body 108 is shaped so as to provide a handle 116 which is thermally insulated from the kettle body 108 so as to prevent it becoming hot in use and burning any user who then picks up the jug kettle 100. This thermal insulation is provided by way of the shaping of the handle so as to provide an air gap between the handle 116 and the kettle body 108, and is further enhanced by use of the thermosetting plastic material which preferably has a low heat conductivity. In this embodiment the finished handle 116 is formed of multiple components, including handle element 122 which is a hollow plastic element which clips and/or is bonded onto the part of the handle 116 formed by the kettle body 108. The material of the handle element 122 may be of lower thermal conductivity than the kettle body material 108, and/or may be made of a material with superior non-slip properties to enhance grip and/or may also be of aesthetic appeal in terms of colour or shape or both. Of course, other techniques, such as the incorporation of further material heat barriers, for producing thermally insulated handles 116 are well known to those skilled in the art, and these are intended to be included for kettles falling within the scope of the claims.

The jug kettle 100 has a removable lid 114 which can be removed in order to permit the jug kettle 100 to be filled with water.

In order to heat the water 118 in the kettle body 108, a heating element (not shown) is provided. Such a heating element is controlled by a switch 104 which is operable to cause an electric current to flow in the heating element. As the current flows the heating element heats up by a process of resistive heating and causes water 118 in contact with the element to heat. In order to prevent the jug kettle 100 from continuing to heat water 118 once it has reached a preselected temperature, a thermostat (not shown) is used to deactivate the switch 104 and prevent further current from being supplied to the heating element. The thermostat may be incorporated with the switch 104 to form a single unit. Such thermostatic control of switches is well-known in the art and will not be described further here.

Electrical power in the form of electric current may be supplied to the heating element in the kettle body 108 via a base unit 106. Such base units are well-known in the art of so-called cordless jug kettles. They provide a stand upon which a jug kettle 100 fits with electrical connection means for enabling electrical power supplied to the base unit, by way of an electrical flex cable for example, to be communicated to the jug kettle 100. This allows the jug kettle 100 to be picked up without having to trail an electrical flex lead, and thereby permits the jug kettle 100 to be moved around freely. It also provides an easy way of providing electrical power to the heating element in a jug kettle 100 without the need for unplugging of a cable or lead.

In one embodiment of Figure 1, electrical power is supplied through a cable (not shown) from a mains power supply (not shown) to the base unit 106. From there it passes through a two-element male-female electrical connector (not shown) in the electrical connector cavity 120 which communicates electrical power between the base unit 106 and the jug kettle 100. A wire or cable means (not shown) connects the electrical connector element in the electrical connector cavity 120 to a thermostatically-controlled switch 104 and thence to the heating element in the kettle body 108, in a manner whose electrical circuit connections are well-known in the art.

In this preferred embodiment, the electrical connector cavity 120 is a separate moulded chamber of or component attached to the kettle body 108 so as to minimise the chance of water leakage from the kettle body 108 to the connector cavity 120. The cable connecting the electrical connector element in the electrical connector cavity 120 to the thermostatically-controlled switch 104 passes through the hollow cavity formed by the handle 116 in the handle element 122. The thermostatically-controlled switch 104 is connected to the heating element via a power cable moulded into or passing through the component of the handle 116 formed by the kettle body 108.

It is to be understood that the positions of the power cables and the means for routing them described above, in connection with preferred embodiments, are merely exemplary and variations will readily occur to those skilled in the art. For example, cables may be moulded or routed through the handle 116 or kettle body 108, and the handle 116 need not be formed of component parts but may be formed as part of the kettle body 108, what is important is that the electrical cables, connectors, switches, thermostat etc. are isolated from the body of water 118 in a manner such that only the heating element comes into contact with the water 118 in the kettle body 108 and no waterproof seals are necessary to protect additional electrical components immersed beneath the water 118 during operation of the kettle.

A relatively large window 110 is shown formed as part of the external wall of the kettle body 108. Although only one window 110 is shown in the preferred embodiment it is possible to have more than one window 110, e.g. two windows may be formed opposite one another. The window 110 is formed of a material through which it is possible to see the meniscus formed by water 118 in the kettle 110, thereby giving a user of the kettle 110 an indication of how much water 118 it contains. The window 110 is preferably formed of a translucent pale green material (although any translucent colour could be used) as this has been found to give a good visibility indication of where in relation to the window 110 the meniscus lies by having good visual contrast between internally submerged portions of the window 110 and those internal portions of the window 110 lying above the meniscus in air.

Preferably, a maximum water level indication 112 is marked upon the window 110, so that a user of the kettle 100 knows when the kettle is full. In the preferred embodiment the window 110 extends to indicate water volumes beyond the maximum water level indication 112 so that the user may empty some water 118 from the kettle 100 before operating the kettle 100. Preferably, the window 110 also indicates a minimum safe level (not shown) for operation so that the user is dissuaded from operating the kettle 100 with insufficient water 118 to cover the heating element. The window 110 is also preferably graduated with units of measurement indicating the volume of water 118 residing in the kettle body 108. These graduations may be in standard measurement units such as pints, litres, millilitres etc. or may correspond to the number of cups or mugs that the remaining volume of water 118 would fill.

Although in the preferred embodiment the window 110 is preferably pale green and translucent, other colours and optical properties may be chosen based upon aesthetic experimentation or upon scientific principles governing the response of the eye. As a non-limiting example, it is known that the eye is most sensitive to green light, and so variations in contrast seen using a green window may be more noticeable than, say, for a red coloured window. This is just one example of how the colour of the window 110 may be chosen. Another example could be to chose the colour of the window 110 (or windows) based upon personal preference, and to that end a range of colours may be supplied in a plurality of finished kettles 100 to provide for end-user choice. The colour of window 110 can also be chosen to complement or contrast with the colour of any light emitted from any light source 102 used within the body of the kettle 100.

Kettles 100 according to the present invention incorporate at least one light source 102, which in preferred embodiments is only operable during operation of the steam control switch (during the boil cycle). According to preferred embodiments of the invention, only a single light source 102 is used, although alternatives using more than one such source are contemplated, for example by providing a plurality of light sources 102 redundancy may be provided in case of failure of one or more lighting units or having a plurality of light sources may give users the option to change the colour of light used. The light source 102 is arranged in a position whereby it is above the maximum water level 112. The light source 102 is sealed against steam produced during operation of the kettle 100 so as to prevent damage to the light source 102 itself or any associated components, such as connectors or driver circuitry (not shown). The light source 102 may also be sealed against occasional immersion caused by tipping of the kettle 100 whereby water 118 comes into direct contact with the sealed light source 102. In this way the light source 102 is spared continuous immersion in water 118, both prolonging its useful life and greatly reducing the potential that water 118 will leak from the seals surrounding the light source 102.

The light source 102 can be sealed in a unit which affixes to the kettle 100. In one preferred embodiment the light source unit is positioned in the kettle lid 114 and is removable along with the kettle lid 114. An electrical connector (not shown) is formed coupling the light source 102 in the lid 114 with electrical power from a complementary connector (not shown) in electrical contact with the input mains power supplied to the switch 104. This allows the light source 114 to be removed whilst the kettle 100 is being filled, and thus reduces the chance of submerging the light source 102 during filling. In this embodiment the electrical connections are such that light source 102 is switched on whilst mains power is supplied to the switch 104 from the base unit 106 when the lid 114 is in position.

The light source 102 is preferably a white or blue light neon indicator whose output is orientated towards the surface of any water 118 contained in the kettle body 108 or towards the window 110. However, it may also be any other sort of light source such as an orange neon, a light emitting diode (LED) source, an automotive bulb or any other low voltage bulb may be used. In the case of low voltage light sources driver circuitry is required to reduce mains voltage to a level suitable. This driver circuitry, which may involve a form of element tapping or secondary or alternate power source, may be located in the light source unit or in the upper part of the kettle in proximity to the switch 104 so as to keep it above the maximum water level 112 and reduce its susceptibility to becoming water-logged. A white or blue light neon source is preferred as it is found to give good contrast when used in conjunction with the translucent pale green window 110 of the preferred embodiments.

In an alternative jug kettle 100 embodiment, the light source is positioned in proximity to the switch 104. This facilitates manufacture as the power connection to the light source 102 can be taken from the terminals of the switch 104 positioned nearby. If desired, the switch 104 and the light source 102 can also be formed as a single unit or as part of a pre-assembled sub-assembly (e.g. in the handle element 122) to further facilitate assembly of the finished kettle 100. Again a blue or white neon mains driven light source 102 is preferred because of the good contrast obtained when they are used in conjunction with a translucent pale green window 110. The light source is directed substantially towards the window 110 to further enhance the contrast seen between an internally submerged part of the window 110 and the internal portion of the window 110 in contact with air.

It can be seen that through use of the various embodiments of the present invention, at least one light source 102 can be incorporated into a main kettle body 108 in which liquid is to be heated so as to illuminate the surface of any liquid which is found in the kettle, and thereby enhance the visibility of a meniscus formed on the window 110 by any liquid in the kettle. In addition, the positioning of at least one light source above the surface of the liquid facilitates construction of the kettle 100 since the light source housing and most of the other electrical components, being above the surface of the liquid, need only be sealed against steam, and possibly also occasional immersion due to tilting of the kettle, and therefore do not need to be sealed to withstand continual immersion. This makes it easier to manufacture reliable leak-free kettles, as leakage due to faulty seals surrounding electrical components are substantially eliminated.

Whilst the invention has been described in relation to the various embodiments above, it is to be understood that many variations and modifications to those embodiments are envisaged by those skilled in the art. These variations are intended to fall within the scope of the claims, and hence the above embodiments are in no way intended to limit the scope of the claims when they are interpreted in light of those exemplary embodiments.

## Claims

1. A kettle comprising:
a window formed in at least part of an outer wall of the kettle; and
at least one light source fixed to an inner surface of said kettle at a position spaced apart from said window and above a maximum liquid level of said kettle for illuminating a top surface of any liquid contained in said kettle such that a liquid level within said kettle can be read through said window.

2. A kettle as in Claim 1, wherein said window is coloured.

3. A kettle as in Claim 2, wherein said window is coloured pale green.

4. A kettle as claimed in any one of the preceding claims, wherein said window is translucent.

5. A kettle as in Claim 4 wherein said window is frosted.

6. A kettle according to any one of Claims 2 to 5, wherein said at least one light source is a different colour from a colour of said window.

7. A kettle as claimed in any one of the preceding claims, wherein said window and said at least one light source are arranged so that a position of a surface meniscus formed by any liquid in said kettle is visible through said window, said position of said surface meniscus being used to indicate levels of any liquid in said kettle.

8. A kettle as claimed in any one of the preceding claims, wherein said window is arranged so that at a maximum liquid level any liquid forms a surface meniscus which is visible through said window.

9. A kettle as claimed in any one of the preceding claims, wherein said window is arranged so that at a minimum liquid level any liquid forms a surface meniscus which is visible through said window.

10. A kettle as claimed in any one of the preceding claims, wherein said at least one light source emits a light beam directed towards said window.

11. A kettle as claimed in any one of the preceding claims, wherein said kettle has a lid and said at least one light source is fixed to said lid.

12. A kettle as claimed in any one of Claims 1 to 10, wherein said kettle has a switch disposed at an upper position opposite said window and said at least one light source is fixed to a point proximal to said switch.

13. A kettle as claimed in any one of the preceding claims, wherein said kettle is a jug kettle.

14. A kettle as claimed in any one of the preceding claims, wherein said kettle is a cordless kettle.

## Patentansprüche

1. Kessel mit:
einem in mindestens einem Teil einer Außenwand des Kessels gebildeten Fenster; und
mindestens einer Lichtquelle, die auf einer inneren Oberfläche des Kessels an einer Stelle im Abstand von dem Fenster und über einem maximalen Flüssigkeitsniveau des Kessels befestigt ist für die Beleuchtung einer Oberfläche einer Flüssigkeit, die in dem Kessel enthalten ist, derart, dass ein Flüssigkeitsniveau in dem Kessel durch das Fenster ausgelesen werden kann.

2. Kessel nach Anspruch 1, wobei das Fenster farbig ist.

3. Kessel nach Anspruch 2, wobei das Fenster blassgrün gefärbt ist.

4. Kessel nach einem der vorhergehenden Ansprüche, wobei das Fenster durchscheinend ist.

5. Kessel nach Anspruch 4, wobei das Fenster glasiert ist.

6. Kessel nach einem der Ansprüche 2 bis 5, wobei mindestens eine Lichtquelle eine andere Farbe hat als die Farbe des Fensters.

7. Kessel nach einem der vorhergehenden Ansprüche, wobei das Fenster und die mindestens eine Lichtquelle so angeordnet sind, dass eine Position eines Oberflächenmeniskus, welcher durch eine Flüssigkeit in dem Kessel gebildet ist, durch das Fenster sichtbar ist und die Position des Oberflächenmeniskus verwendet wird, um Niveaus einer Flüssigkeit in dem Kessel anzuzeigen.

8. Kessel nach einem der vorhergehenden Ansprüche, wobei das Fenster so angeordnet ist, dass bei einem maximalen Flüssigkeitsniveau eine Flüssigkeit einen Oberflächenmeniskus bildet, welcher durch das Fenster sichtbar ist.

9. Kessel nach einem der vorhergehenden Ansprüche, wobei das Fenster so angeordnet ist, dass bei einem minimalen Flüssigkeitsniveau eine Flüssigkeit einen Oberflächenmeniskus bildet, welcher durch das Fenster sichtbar ist.

10. Kessel nach einem der vorhergehenden Ansprüche, wobei die mindestens eine Lichtquelle einen zu dem Fenster hin gerichteten Lichtstrahl emittiert.

11. Kessel nach einem der vorhergehenden Ansprüche, wobei der Kessel einen Deckel hat und die mindestens eine Lichtquelle an dem Deckel befestigt ist.

12. Kessel nach einem der Ansprüche 1 bis 10, wobei der Kessel einen Schalter hat, der an einer oberen Stelle gegenüber dem Fenster angeordnet ist und die mindestens eine Lichtquelle an einer Stelle nahe dem Schalter befestigt ist.

13. Kessel nach einem der vorhergehenden Ansprüche, wobei der Kessel ein Wasserkocher ist.

14. Kessel nach einem der vorhergehenden Ansprüche, wobei der Kessel ein schnurloser Kessel ist.

## Revendications

1. Bouilloire comprenant :
une fenêtre formée dans au moins une partie d'une paroi extérieure de la bouilloire ; et
au moins une source de lumière fixée sur une surface interne de ladite bouilloire à une position espacée de ladite fenêtre et au-dessus du niveau de liquide maximum de ladite bouilloire afin d'éclairer une surface supérieure de n'importe quel liquide contenu dans ladite bouilloire de sorte qu'on peut lire le niveau de liquide à l'intérieur de ladite bouilloire par ladite fenêtre.

2. Bouilloire selon la revendication 1, dans laquelle ladite fenêtre est colorée.

3. Bouilloire selon la revendication 2, dans laquelle ladite fenêtre est colorée en vert pâle.

4. Bouilloire selon l'une quelconque des revendications précédentes, dans laquelle ladite fenêtre est translucide.

5. Bouilloire selon la revendication 4, dans laquelle ladite fenêtre est dépolie.

6. Bouilloire selon l'une quelconque des revendications 2 à 5, dans laquelle ladite au moins une source de lumière est d'une couleur différente de celle de ladite fenêtre.

7. Bouilloire selon l'une quelconque des revendications précédentes, dans laquelle ladite fenêtre et ladite au moins une source de lumière sont agencées de telle sorte qu'une position d'un ménisque de surface formé par n'importe quel liquide contenu dans ladite bouilloire est visible à travers ladite fenêtre, ladite position dudit ménisque de surface étant utilisée pour indiquer les niveaux de n'importe quel liquide dans ladite bouilloire.

8. Bouilloire selon l'une quelconque des revendications précédentes, dans laquelle ladite fenêtre est agencée de telle sorte qu'à un niveau de liquide maximum, n'importe quel liquide forme un ménisque de surface qui est visible à travers ladite fenêtre.

9. Bouilloire selon l'une quelconque des revendications précédentes, dans laquelle ladite fenêtre est agencée de telle sorte qu'à un niveau de liquide minimum, n'importe quel liquide forme un ménisque de surface qui est visible à travers ladite fenêtre.

10. Bouilloire selon l'une quelconque des revendications précédentes, dans laquelle ladite au moins une source de lumière émet un faisceau de lumière dirigé vers ladite fenêtre.

11. Bouilloire selon l'une quelconque des revendications précédentes, dans laquelle ladite bouilloire possède un couvercle et ladite au moins une source de lumière est fixée audit couvercle.

12. Bouilloire selon l'une quelconque des revendications 1 à 10, dans laquelle ladite bouilloire possède un commutateur situé au niveau d'une position supérieure opposée à ladite fenêtre et ladite au moins une source de lumière est fixée à un point proche dudit commutateur.

13. Bouilloire selon l'une quelconque des revendications précédentes, dans laquelle ladite bouilloire est une bouilloire carafe.

14. Bouilloire selon l'une quelconque des revendications précédentes, dans laquelle ladite bouilloire est une bouilloire sans fil.
